(19)

Europäisches
Patentamt
European
Patent Office
Office européen
des brevets

(11) **EP 1 956 725 A1**

(12) **EUROPEAN PATENT APPLICATION**

(43) Date of publication:
**13.08.2008 Bulletin 2008/33**

(51) Int Cl.:
*H04B 3/46* (2006.01)

(21) Application number: **08151012.5**

(22) Date of filing: **04.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.02.2007 IL 18120707**

(71) Applicant: **ECI Telecom Ltd.**
**Petach-Tikva 49517 (IL)**

(72) Inventors:
• **Matza, Avi**
  **74073, Nes Ziona (IL)**
• **Sharfer, Ilan**
  **76568, Rehovot (IL)**

(74) Representative: **Modiano, Micaela Nadia et al**
**Modiano Josif Pisanty & Staub Ltd**
**Thierschstrasse 11**
**80538 München (DE)**

(54) **Method for estimating crosstalk interferences in a communication network**

(57) A method is provided for reducing interferences in communications exchanged along a plurality of communication channels extending between a DSLAM and subscribers' terminals. The method comprises i) storing a mathematical representation of the plurality of communication channels; ii) measuring at least one parameter characterizing a first communication channel; iii) applying the measured parameter(s) to update the mathematical representation of the first communication channel if required and replacing the mathematical representation of the first communication channel with the updated mathematical representation thereof. At times when communications are exchanged along that first communication channel, applying updated mathematical representations of the first communication channel together with most recent mathematical representations available of one or more other communication channels that are physically adjacent to the first communication channel in order to estimate expected interferences in communications to be exchanged along that first communication channel, modifying at least one operating parameter of the first communication channel in response to said estimation; and repeating the former steps for at least one other communication channel.

```
                                                              ┌─ 10
┌───────────────────────────────────────┐
│ DESCRIBING CROSSTALK CHANNEL TRANSFER  │
│    FUNCTION BY A PRE-DEFINED MODEL      │
└───────────────────────────────────────┘
                    │                         ┌─ 20
                    ▼
┌───────────────────────────────────────┐
│         STORING MODEL AT A DSLAM        │
└───────────────────────────────────────┘
                    │                         ┌─ 30
                    ▼
┌───────────────────────────────────────┐
│    MEASURING ACTUAL CROSSTALK INTERFERENCES    │
└───────────────────────────────────────┘
                    │                         ┌─ 40
                    ▼
┌───────────────────────────────────────┐
│ UPDATING MODEL BASED ON ACTUAL MEASUREMENTS │
└───────────────────────────────────────┘
```

*FIG.1*

**Description**

**Field of the Invention**

The field of the present invention relates in general to telecommunications and particularly to solving the problem of interferences in an access communications network.

**Background of the Invention**

Digital Subscriber Lines (DSL) technology has been developed to increase the effective bandwidth of existing subscriber line connections. One of the primary factors limiting the bandwidth, or channel capacity, of any typical access network making use of a x-aSL protocol such as G . Lite, ADSL, VDSL, SDSL, MDSL, RADSL, HDSL, etc, is noise. Whether that noise is a result of echo, channel cross talk, impulse or background sources. Thus, efforts are being made to minimize the various noise sources.

One attempt that is being made to minimize cross-talk between subscriber lines is by using the topology of the subscriber lines themselves, therefore telephone subscriber loops are typically organized in binders with a number of line pairs each sharing a common physical or electrical shield in a cable. Due to capacitance and inductive coupling the phenomena of cross-talk between each twisted pair is being experienced even though the pairs are well insulated for DC. The effective cross-talk may further be reduced by adapting different twist distances among different pairs in the binder group, where the latter (the binder groups) are also twisted so that no two groups are adjacent to each other for a long distance.

Cross-talk noise results from the operation of adjacent telephone subscriber loops of the same or different types of transmission systems. It is typically divided into what is known in the art as near end cross talk ("NEXT") and far end cross-talk ("FEXT") depending on where the cross-talk is generated. NEXT is defined as cross-talk occurring between subscriber lines in a binder coupled on one end with a common transceiver, while FEXT is defined as a cross-talk occurring between a receiving path and a transmitting path of the DSL transceivers on opposite ends of two different subscriber loops within the same twisted pair wire or binder. The FEXT noise at the receiver front end of a particular DSL transceiver is caused by signals transmitted by other transceivers at the opposite end of the twisted wire.

US 6,965,657 describes an apparatus and method for reducing interferences due to near end cross-talk (NEXT), self-NEXT or echo, and far end cross-talk (FEXT) by using a pseudo-random noise generator coupled to the transmit path to inject a codewords and a correlator to generate an ordered set of correlation coefficients corresponding with successive phasings of the codeword with respect to a received signal.

US 6,212,225 discloses a startup protocol for communications to be held along a line having a master transceiver at one end and a slave transceiver at the other. At the first stage, the operation of the equalizer and the timing recovery system of the slave is being converged while converging the noise reduction system of the master. Upon completion of this first stage, the equalizer and the timing recovery system of the master, as well as the noise reduction of the slave are being converged while freezing the timing recovery system of the slave, and resetting the noise reduction system of the master. Next, the protocol enters a stage of re-converging the noise reduction of the master, following which the master transceiver and the slave transceiver are ready to communicate with each other.

US 2003/190000 teaches the use of an ADSL remote terminal end transceiver unit for synchronizing transmission of upstream and downstream data between TCM-ISDN communication and ADSL communication, and which provides in addition NEXT and FEXT tables. In these tables equalizing coefficients that are appropriate for a NEXT noise and a FEXT noise are stored, so that the same equalizers can be used to cancel NEXT and then FEXT using the same hardware.

In addition various attempts were made to obtain general models describing crosstalk interferences and apply these models as a representation of the crosstalk occurring at a given network. Such attempts are described for example in "Methods of Summing Crosstalk from Mixed Sources Part I: Theoretical Analysis" and "Methods of Summing Crosstalk from Mixed Sources Part II: Performance Results" by S. Galli and K.J. Kerpez, IEEE Trans. Commun., vol. 50, pp. 453-461, Mar. 2002, and IEEE Trans. Commun., vol. 50, pp. 600-607, April 2002, respectively

Thus, while applying the crosstalk channel estimation techniques that are known in the art per se, we assume that we know nothing about the actual deployment. Therefore, it has been suggested to use for example the error reading which occur during transmission, also for crosstalk channel estimation. Others suggest using the FEQ coefficients for the same purpose.

In addition, current techniques of crosstalk estimation attempt to fully estimate the crosstalk channel parameters, i.e. both magnitude and phase. This is appropriate for cases such as DSM Level 3, where the channel estimates can be used to design a pre-coder for vectored transmission, or for joint detection. However, the techniques discussed in the prior art suffer from a further disadvantage as they require dedicating part of the upstream or downstream bandwidth for conveying information to be used in estimating the crosstalk channel. One such example is to read back the direct channel coefficients. Another suggestion is to read the slicer error samples. Alternatively, it has been suggested to modify the Synchronization symbols in such a way that each CPE (Customer Premises Equipment) is able to estimate the crosstalk channel once the position of the Synchronization symbol is known. Apart from the bandwidth consumption, these techniques would also require a change in the existing standards according to which the industry has been operating.

However, all the prior art methods rely on retrieving some crosstalk channel estimations based on ad hoc measurements which can either adequately the crosstalk interferences between adjacent lines or can simply provide a wrong estimation by capturing a temporary situation while taking such measurement and reflecting the measurement result in the estimation for later use.

**Summary of the Invention**

In order to solve the above-described problems, one of the objects of the present invention is provide a solution to enable semi dynamic crosstalk channel estimation for various applications (such as DSM level 2) .

Therefore, the present invention provides a method for reducing interferences in communications exchanged along a plurality of communication channels extending between a Digital Subscriber Loop Access Multiplexer ("DSLAM") and a plurality of subscribers' devices, wherein the method comprises the steps of:

(i) storing a mathematical representation associated with crosstalk interferences expected along the plurality of communication channels;

(ii) measuring at least one parameter characterizing at least one first communication channel;

(iii) applying the at least one measured parameter to update (or modify as the case may be) the mathematical representation of that first communication channel if required;

(iv) replacing the mathematical representation of the first communication channel with the updated mathematical representation;

(v) at times when communications are exchanged along that communication channel (i.e. when the channel is active), applying the updated mathematical representation of the first communication channel together with most recent mathematical representations available of one or more other communication channels that are physically adjacent to that first communication channel, in order to estimate expected interferences in communications to be exchanged along that first communication channel;

(vi) modifying at least one operating parameter of that first communication channel in response to the above estimation; and

(vii) repeating steps (ii) to (vi) for at least one further communication channel.

According to the first step of the method described above, a mathematical representation associated with crosstalk interferences expected along the plurality of communication channels is stored. However, as will be appreciated by those skilled in the art, the invention should be understood to encompasses also cases where there are more than one representation associated with that plurality of communication channels, and these more than one mathematical representations are stored accordingly, provided, however, that the number of these mathematical representations is substantially less than the total number of communication channels comprised in that plurality of communication channels (i.e. that the number of mathematical representations is less than the number of communication channels described by them).

By a preferred embodiment of the present invention, the updated mathematical representation of the first communication channel is applied together with most recent mathematical representations available of one or more other communication channels that are physically adjacent to that first communication channel and which are currently active, in order to estimate the expected crosstalk interferences of that first communication channel.

According to an embodiment of the present invention, the at least one measured parameter is a measurement of a single bin power reduction associated with a respective communication channel out of the plurality of communication channels. More preferably, when more accurate estimation is required, an average of single bin power reduction measurements may be used.

In accordance with still another preferred embodiment of the invention, the mathematical representation of each of the plurality of communication channels is based upon measurement(s) taken while deploying the respective communication channels.

By another preferred embodiment of the invention a single mathematical model is used to mathematically represent the plurality of communication channels associated with that DSLAM, and wherein that single mathematical model preferably comprises at least one free coefficient that would be updated based upon real measurements.

According to another embodiment of the invention, a method is provided that allows estimation of the magnitude of the crosstalk channel.

By this embodiment, the underlying principle is to change the transmit power level in a single sub-carrier of one user, and measuring the effect on the noise level as noted by another user. This is equivalent to a local change in the transmit PSD level. If the first user generates strong crosstalk interference with respect to the second user, the change in the noise power level will be significant. The crosstalk channel interference can then be estimated by relating the change of the measured noise power level to the change of the transmit power level. However, it should be taken into account that there are several crosstalk interferences inducing sources that affect a given user, each one by a different amount. Thus, the preferred general procedure according to this embodiment is to change the transmit power level of the other users, one after the other, while measuring each time the noise power level occurring along the first channel. Once a sufficient number of noise measurements have been collected, they are used to solve mathematically for the unknown crosstalk channel interference coefficients as well as the unknown background noise level (a noise that is not effected by means of crosstalk interferences, such as thermal 1 noise at the receiver). One way of obtaining the mathematical solution is for example by the Least Squares method, or by any other suitable constrained optimization method. The change in the transmit PSD can be affected by changing the transmit fine gains, known in ADSL and VDSL as the gi. This change may require changing also the local bit loading profile in order to avoid stressing the operating margin, so that the modems can continue normal error-free communication. The noise level can be measured by reading the SNR at the affected tone. After repeating the process described above for essentially all the sub-carriers and users sharing the cable, the complete information on crosstalk channels' interferences between each pair of users becomes available.

One of the advantages of this embodiment is that it does not require changing the international already established standard, so that it is applicable also to modems operating under older standards, e.g. G.992.3 (ADSL2), as well as with modems adhering to future versions of the standard. The amount of bandwidth required to support this embodiment is very small, and is within the capacity of the available overhead channels. Also, another advantage of this embodiment is that it does not require service interruption, while carrying out the method described herein.

## BRIEF DESCRIPTION OF THE DRAWINGS

A better understanding of the present invention is obtained when the following non-limiting detailed description is considered in conjunction with the following drawings in which:

FIG. 1 illustrates a method for carrying out an embodiment of the present invention;
FIG. 2 presents a graph of the results obtained while using the method illustrated in Fig. 1; and
FIG. 3 illustrates a method for carrying put another embodiment of the present invention for estimating cross talk between adjacent channels.

## DETAILED DESCRIPTION OF THE INVENTION

Reference will now be made in detail to an implementation consistent with some embodiments of the present invention as illustrated in the accompanying drawings.

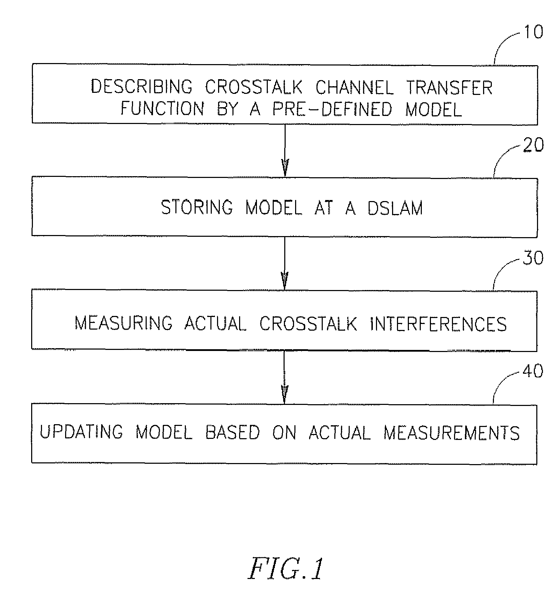

Let us consider now a non-limiting example of a method carried out in accordance with an embodiment of the present invention as depicted in Fig. 1. By this example, the crosstalk channel transfer function is described by a predefined function (step 10 of Fig. 1), which, in the present case, we shall assume to be:

$$H_{FEXT}=A+B*log10(f)+C*sqrt(f) \qquad (1)$$

wherein:

$H_{FEXT}$ is the far end crosstalk transfer function of the channel;
f is the frequency at which communications are exchanged along the channel; and
A, B and C are parameters relating to the channel of interest.

This formula (model) is stored (step 20) at the DSLAM (possibly but not necessarily, with other general models). Next, a direct transfer function is measured during normal course of DSL modem activation (step 30) and the formula/model is updated based on actual deployment measurements (step 40). In addition, factor K which is also deployment dependent is calculated (step 50). This factor can be calculated (per every channel model) by using a short measurement of a single bin power reduction. If more accurate estimation is required then an average could be used.

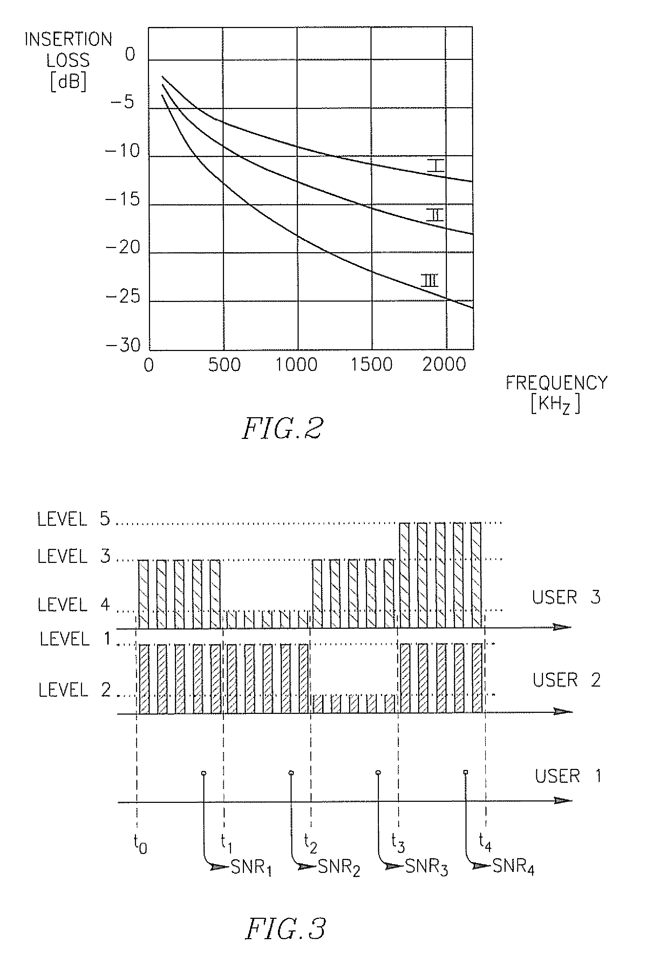

Fig. 2 shows the insertion loss as a function of the frequency used for 3 models using the same basic equation (1) with different sets of selected A, B and C parameters. The values of the parameters for the various curves are:

> For curve I: A=-6.17; B=-11.9; and C=-6.46;
> For curve II: A=-4.32; B=-8.34; and C=-4.52; and
> For curve III: A=-3.08; B=-5.96; and C=-3.23.

When the DSL system has been deployed in the field, the following insertion losses were measured for a specific channel: -6.5dB at f=500Khz, -7.5dH at f=700Khz and -9dB at f=1Mhz. As can be seen from Fig. 2, these points correspond to curve I, and so the updated mathematical representation for that specific channel is:

$$H_{FEXT}=-6.17 \ -11.9*log10(f)-6.46*sqrt(f)$$

Let us now consider another example for estimating the crosstalk interferences of a channel by using PSD manipulation. In this example we have m users communicating along adjacent channels which may create crosstalk interferences to each other, and wherein the communications are carried out while using k tones (m and k are integers). Let us assume that we want now to estimate the crosstalk interferences for user No. i that normally communicates at tone j. First, all other users will switch off communications on tone j (e.g. by setting fine gains to 0, or reduce the gain by to 14.5dB). Next, we measure the Signal to Noise Ratio ("SNR") of user i so as to determine the background noise level on tone j. Next, all other users are brought back (i.e. become active again) one by one, while measuring the SNR each time another user is brought back, to allow determining the noise level on tone j. Then, all SNR measurements are used to estimate the crosstalk interferences for the channel used by user i on tone j, applying Least Square estimation. Now, suppose we have three users (m=3) all transmitting at -60dBm/Hz. The transmit PSD on the first and second tones was changed between 0 and -10dB, relative to the nominal PSD of users 2 and 3. A total of 7 average SNR measurements were used and the results obtained were used in a non-linear least squares optimization program. The outcome of this procedure led to the determination that users 2 and 3 generate crosstalk interferences to the channel used by user 1 at the level of $H_{1,2}$= -60dB and $H_{1,3}$= -70 dB, respectively, and that the background noise for user 1 channel is-120dBm/Hz.

Let us consider now another example illustrating a method of implementing the present invention where the step of measuring parameters characterizing a communication channel of user 1 is conducted by changing the transmit power level in a single sub-carrier of other users, measuring the effect on noise level noted by that user 1 and repeating this procedure for a number of active sub-carriers associated with users 2 and 3 which communicate along channels that are adjacent to the communication channel of user 1.

Fig. 3 presents a time domain chain of operations carried out in a system comprising three users. At to all three users are in a normal state of communication. User 1 performs SNR estimation for each bin within the band allocated to this user. Users 2 and 3 change periodically their transmit PSD levels, consequently affecting the SNR measured by user 1. The vertical bars shown in this Fig. 3, indicate the transmit PSD level for a given bin within the allocated band, and similarly, this method can be simultaneously performed for any number of bins required.

The timeline is divided into several time intervals as shown in the Fig, $t_0$, $t_1$, $t_2$, $t_3$ and $t_4$. In the time interval extending between $t_0$ and $t_1$ user 2 transmits signals at a PSD level designated as Level 1, while user 3 transmits signals at a PSD level designated as Level 3. The transmit PSD levels can be changed by varying the fine gain parameter, gi, associated with the particular bin. During the time interval between $t_0$ and $t_1$ user 1 measures the SNR and the result thus obtained is SNR1. A similar process is repeated in the following time intervals. Between $t_1$ and $t_2$ user 2 transmits again at PSD Level 1 while user 3 transmits now at another PSD level, designated as Level 4. For this interval, user 1 measures SNR2. The process is then repeated and once a sufficient number of measurements are made, the unknown parameters, the two cross-channel coefficients and the one for the background noise level at the receiver of user 1, can be estimated. Obviously the number of measurements should be at least as much as the number of unknowns.

The SNR measurements are than used in an optimization program, which stores a mathematical model of the SNR as a function of the known and unknown parameters. The known parameters include the transmit PSD levels of the two users and the received signal power at user 1. The optimization program would adjust the unknown parameters so that the SNR predicted by the model matches as closely as possible the SNR measurements. Once optimal values are found, an estimate of the unknown parameters is available. As will be appreciated by those skilled in the art, there can be several optimization criteria such as Lon-linear Least Squares, Maximum Likelihood, etc.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described herein above. Rather the scope of the invention is defined by the claims that follow:

**Claims**

1. A method for reducing interferences in communications exchanged along a plurality of communication channels extending between a Digital Subscriber Loop Access Multiplexer (DSLAM) and a plurality of subscribers' devices, wherein the method comprises the steps of:

   (i) storing a mathematical representation of said plurality of communication channels;
   (ii) measuring at least one parameter characterizing at least one first communication channel;
   (iii) applying said at least one measured parameter to update the mathematical representation of said first communication channel if required;
   (iv) replacing the mathematical representation of said first communication channel with the updated mathematical representation thereof;
   (v) at times when communications are exchanged along said first communication channel, applying updated mathematical representations of said first communication channel together with most recent mathematical representations available of one or more other communication channels that are physically adjacent to said first communication channel, in order to estimate expected interferences in communications to be exchanged along said first communication channel;
   (vi) modifying at least one operating parameter of said first communication channel in response to said estimation; and
   (vii) repeating steps (ii) to (vi) for at least one other communication channel.

2. A method according to claim 1, wherein said updated mathematical representation of said first communication channel is applied together with most recent mathematical representations of one or more other communication channels that are physically adjacent to said first communication channel and are currently active.

3. A method according to claim 1, wherein said at least one measured parameter is a measurement of a single bin power reduction associated with a respective communication channel out of said plurality of communication channels.

4. A method according to claim 3, wherein said at least one measured parameter is an average of single bin power reduction measurements.

5. A method according to claim 1, wherein said mathematical representation of each of the plurality of communication channels is based upon at least one measurement taken while deploying said communication channel.

6. A method according to claim 1, wherein a single mathematical model is used to mathematically represent said plurality of communication channels, and wherein said single mathematical model comprises one or more free coefficients that would be updated based upon real measurements.

7. A method according to claim 1, wherein step (ii) is conducted by changing the transmit power level in a single sub-carrier of a user associated with another communication channel, measuring the effect on noise level noted by a user communicating along said first communication channel and repeating this step for a number of active sub-carriers associated with communication channels adjacent to said first communication channel.

8. A method according to claim 1, wherein step (ii) is conducted by changing the transmit power level in a single sub-carrier of a user associated with said first communication channel, measuring the effect on noise level noted by a user communicating along another communication channel and repeating this step for a number of active sub-carriers associated with communication channels adjacent to said first communication channel.

┌─────────────────────────────────────────────────────────┐
│   DESCRIBING CROSSTALK CHANNEL TRANSFER                   │
│      FUNCTION BY A PRE-DEFINED MODEL                      │
└─────────────────────────────────────────────────────────┘
                          ↓
┌─────────────────────────────────────────────────────────┐
│            STORING MODEL AT A DSLAM                       │
└─────────────────────────────────────────────────────────┘
                          ↓
┌─────────────────────────────────────────────────────────┐
│         MEASURING ACTUAL CROSSTALK INTERFERENCES         │
└─────────────────────────────────────────────────────────┘
                          ↓
┌─────────────────────────────────────────────────────────┐
│       UPDATING MODEL BASED ON ACTUAL MEASUREMENTS        │
└─────────────────────────────────────────────────────────┘

*FIG.1*

*FIG.2*

*FIG.3*

**European Patent Office**

**DECLARATION**

which under Rule 63 of the European Patent Convention
shall be considered, for the purposes of subsequent
proceedings, as the European search report

Application Number

EP 08 15 1012

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

INV.
H04B3/46

The claims lack clarity (Article 84 EPC)
to such an extent that a meaningful search
is not possible in that their
subject-matter cannot be compared with the
prior art.
Claim 1 relates to a method for reducing
interferences in communications exchanged
along a plurality of communication
channels extending between a Digital
Subscriber Loop Access Multiplexer (DSLAM)
and a plurality of subscribers' devices,
wherein the method comprises the steps of:
(I) storing a mathematical representation
of said plurality of communication
channels;
(ii) measuring at least one parameter
characterizing at least one first
communication channel;
(iii) applying said at least one measured
parameter to update the mathematical
representation of said first communication
channel if required;
(iv) replacing the mathematical
representation of said first communication
channel with the updated mathematical
representation thereof;
(v) at times when communications are
exchanged along said first communication
channel, applying updated mathematical
representations of said first
communication channel together with most
recent mathematical representations
available of one or more other
communication channels that are physically
adjacent to said first communication
channel, in order to estimate expected
interferences in communications to be
exchanged along said first communication
channel;

-/--

| Place of search | Date | Examiner |
|---|---|---|
| Munich | 9 June 2008 | Bossen, Michael |

EPO FORM 1504 (P04F37)

**European Patent Office**

**DECLARATION**

which under Rule 63 of the European Patent Convention shall be considered, for the purposes of subsequent proceedings, as the European search report

Application Number

EP 08 15 1012

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

(vi) modifying at least one operating parameter of said first communication channel in response to said estimation; and
(vii) repeating steps (ii) to (vi) for at least one other communication channel.
Claim 1 in itself is defined in such a manner that the skilled person does not know what the intended scope of protection is, for the following reasons:
In feature (iii) the action of applying said at least one measured parameter to update the mathematical representation of said first communication channel is carried out on condition that it is required. The claim itself does not define what is to be meant be "it is required".
Further, neither the dependent claims nor the description provide such a definition.
Consequently, feature (iii) is in its entirety unclear.
Feature (iv) is defined through "the updated mathematical representation" that is to be provided by feature (iii). Since feature (iii) is unclear, the product "the updated mathematical representation" is also unclear and consequently the feature (iv) is unclear.
Feature (v) is defined through "most recent mathematical representations".
Since there is a difference between "mathematical representations" and "most recent mathematical representations" but a clear distinction between the two is not in itself evident, the feature is considered unclear. Further, neither the dependent claims nor the description provide any useful definition.
Furthermore, feature (v) is defined by

-/--

| Place of search | Date | Examiner |
|---|---|---|
| Munich | 9 June 2008 | Bossen, Michael |

EPO FORM 1504 (P04F37)

**European Patent Office**

**DECLARATION**

which under Rule 63 of the European Patent Convention shall be considered, for the purposes of subsequent proceedings, as the European search report

Application Number

EP 08 15 1012

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason:<br><br>"applying updated mathematical representations of said first communication channel together with most recent mathematical representations". It is not clear what is meant by that wording and neither the dependent claims nor the description provide any adequate definition.<br>Even further, feature (v), in particular the wording "in order to estimate expected interferences", attempts to define the subject-matter in terms of the result to be achieved. To the skilled person it is unclear how this result is to be achieved.<br>Claim 1 is not supported by the description contrary to the requirements of Article 84 EPC, the reasons being as follows:<br>In feature (I) it is unclear which mathematical representation of said plurality of communication channels is stored. In the description on page 9, lines 11-13 the "crosstalk channel transfer function" is mentioned. In what follows, a link between the "crosstalk channel transfer function" and the "insertion loss" is assumed, that allows to transfer coefficients directly from a measurement of "insertion loss" to model the "crosstalk channel transfer function". This link is not explained in the description and as such appears absurd to the skilled person. In the description on page 12, lines 18-21 a "mathematical model of the SNR as a function of the known and unknown parameters" is mentioned. Consequently, the description does not show a mathematical representation of communication channels that can be used in<br>-/-- | |

| Place of search | Date | Examiner |
|---|---|---|
| Munich | 9 June 2008 | Bossen, Michael |

EPO FORM 1504 (P04F37)

**European Patent**
**Office**

**DECLARATION**

Application Number

which under Rule 63 of the European Patent Convention EP 08 15 1012
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

reducing interferences in communications
exchanged along a plurality of
communication channels extending between a
Digital Subscriber Loop Access Multiplexer
(DSLAM) and a plurality of subscribers'
devices.
Nowhere in the description can any support
for the features (iii)-(v) be found.

The applicant's attention is drawn to the
fact that a search may be carried out
during examination following a declaration
of no search under Rule 63 EPC, should the
problems which led to the declaration
being issued be overcome (see EPC
Guideline C-VI, 8.2).
-----

| Place of search | Date | Examiner |
|---|---|---|
| Munich | 9 June 2008 | Bossen, Michael |

EPO FORM 1504 (P04F37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6965657 B
- US 6212225 B

- US 2003190000 A

**Non-patent literature cited in the description**

- **S. GALLI ; K.J. KERPEZ.** Methods of Summing Crosstalk from Mixed Sources Part I: Theoretical Analysis'' and ''Methods of Summing Crosstalk from Mixed Sources Part II: Performance Results. *IEEE Trans. Commun.,* March 2002, vol. 50, 453-461

- *IEEE Trans. Commun.,* April 2002, vol. 50, 600-607